# EUROPEAN PATENT APPLICATION

(11) **EP 3 444 806 A1**
(43) Date of publication of application: **20.02.2019**
(21) Application number: 16894814.9
(22) Date of filing: 06.05.2016
(51) Int. Cl.: G10L 15/02

(54) **VOICE RECOGNITION-BASED DECODING METHOD AND DEVICE**

(30) Priority: 11.04.2016 CN 201610221182
(71) Applicant: Aispeech Co., Ltd., Suzhou, Jiangsu 215123 (CN); Shanghai Jiao Tong University, Shanghai 200240 (CN)
(72) Inventor: YU, Kai, Suzhou Jiangsu 215123 (CN); ZHOU, Weida, Suzhou Jiangsu 215123 (CN); CHEN, Zhehuai, Suzhou Jiangsu 215123 (CN); DENG, Wei, Suzhou Jiangsu 215123 (CN); XU, Tao, Suzhou Jiangsu 215123 (CN)
(74) Representative: Patentship Patentanwaltsgesellschaft mbH
(86) International application number: PCT/CN2016/081334
(87) International publication number: WO 2017/177484

(57) **Abstract**

The present disclosure discloses a method and device for speech recognition and decoding, pertaining to the field of speech processing. The method comprises: receiving speech information, and extracting an acoustic feature; computing information of the acoustic feature according to a connection sequential classification model; when a frame in the acoustic feature information is a non-blank model frame, performing linguistic information searching using a weighted finite state transducer adapting acoustic modeling information and storing historical data, or otherwise, discarding the frame. By establishing the connection sequential classification model, the acoustic modeling is more accurate. By using the weighted finite state transducer, model representation is more efficient, and nearly 50% of computation and memory resource consumption is reduced. By using a phoneme synchronization method during decoding, amount and times of computations are effectively reduced for model searching.

## Description

### TECHNICAL FIELD

The present disclosure pertains to the field of speech processing, and specifically relates to a method and device for speech recognition and decoding.

### BACKGROUND

Speech recognition is an artificial intelligence technology allowing machines to transform speech signals into corresponding texts or commands by recognition and comprehension processes. In traditional speech recognition, all linguistic information (including word pronunciation sequence, occurrence probability of phrase and so on) may be respectively transformed into a structure having four attributes, namely "input", "output", "path weight" and "state transition", and all transformed linguistic information may be composited, and then a network structure is global optimized to constitute an overall speech recognition search network in which a searching can be performed during a decoding process. Reference is roughly made to the following diagram (what follows "/" in "Examples" signifies a path weight) for a construction process:

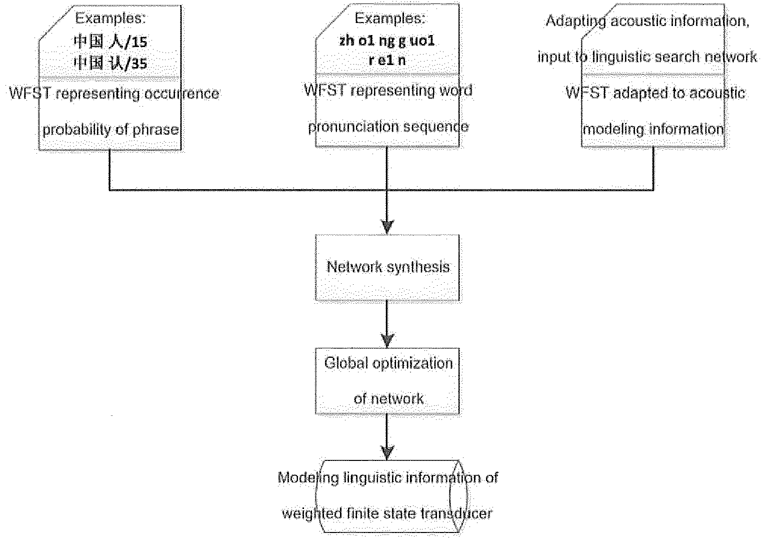

In
traditional speech recognition technologies are constructed based on Hidden Markov Model, Frame Synchronous Decoding and Weighted Finite State Transducer methods. Mainly following disadvantages exist:
A modeling effect of the Hidden Markov Model is defective.

The Frame Synchronous Decoding is huge and redundant in amount of computation.

The Weighted Finite State Transducer under this framework consumes a large number of computing and memory resources.

### SUMMARY

To solve the above problems, embodiments of the present disclosure provide a method and device for speech recognition and decoding. The technical solutions are as below:
In a first aspect, there is provided a method for speech recognition and decoding, including:
receiving speech information, and extracting an acoustic feature; and
computing information of the acoustic feature according to a connection sequential classification model;
wherein the information of the acoustic feature substantially includes a vector extracted frame by frame from acoustic information of an acoustic wave.

A storage structure of the acoustic information is a word graph of the connection sequential classification model, an information storage structure of the acoustic feature is represented based on the weighted finite state transducer, and all candidate acoustic output models between two different model output moments are connected one to another.

Specifically, after inputting each frame of the acoustic feature, the connection sequential classification model may obtain, frame by frame, an occurrence probability of individual phonemes.

Linguistic information searching is performed using a weighted finite state transducer adapting acoustic modeling information and historical data is stored when a frame in the acoustic feature information is a non-blank model frame. Otherwise, the frame is discarded.

Specifically, the method further includes: outputting a speech recognition result by synchronization decoding of phoneme.

In a second aspect, there is provided a device for speech recognition and decoding, including:
a feature extracting module configured to receive speech information and extract an acoustic feature; and
an acoustic computing module configured to compute information of the acoustic feature according to a connection sequential classification model;
wherein the information of the acoustic feature substantially includes a vector extracted frame by frame from acoustic information of an acoustic wave.

A storage structure of the acoustic information is a word graph of the connection sequential classification model, an information storage structure of the acoustic feature is represented based on the weighted finite state transducer, and all candidate acoustic output models between two different model output moments are connected one to another.

Specifically, after inputting each frame of the acoustic feature, the connection sequential classification model may obtain, frame by frame, an occurrence probability of individual phonemes.

The device further includes a decoding and searching module configured to perform linguistic information searching using a weighted finite state transducer adapting acoustic modeling information and to store historical data when a frame in the acoustic feature information is a non-blank model frame, or otherwise to discard the frame.

The device further includes a phoneme decoding module configured to output a speech recognition result by synchronization decoding of phoneme,

By establishing the connection sequential classification model, the acoustic modeling is more accurate. By using the improved weighted finite state transducer, model representation is more efficient, and nearly 50% of computation and memory resource consumption is reduced. By using a phoneme synchronization method during decoding, amount and times of computation are effectively reduced for model searching.

### BRIEF DESCRIPTION OF THE DRAWING

To describe the technical solutions in the embodiments of the present disclosure more clearly, the following will briefly introduce the accompanying drawings required for describing the embodiments. Apparently, the accompanying drawings in the following description show merely some embodiments of the present disclosure, and a person of ordinarily skilled in the art may still derive other embodiments from these accompanying drawings without creative efforts.
FIG. 1 is a flowchart of a method for speech recognition and decoding according to a first embodiment of the present disclosure;
FIG. 2 is a schematic diagram of a weighted finite state transducer adapting acoustic modeling information according to an embodiment of the present disclosure;
FIG. 3 is a schematic diagram of an acoustic information structure according to an embodiment of the present disclosure;
FIG. 4 is a flowchart of a method for synchronization decoding of phoneme according to a second embodiment of the present disclosure; and
FIG. 5 is a structural schematic diagram of speech recognition and decoding according to an embodiment of the present disclosure.

### DETAILED DESCRIPTION OF THE EMBODIMENTS

To make the objectives, technical solutions, and advantages of the present disclosure clearer, the following will further describe in detail the embodiments of the present disclosure with reference to the accompanying drawings,

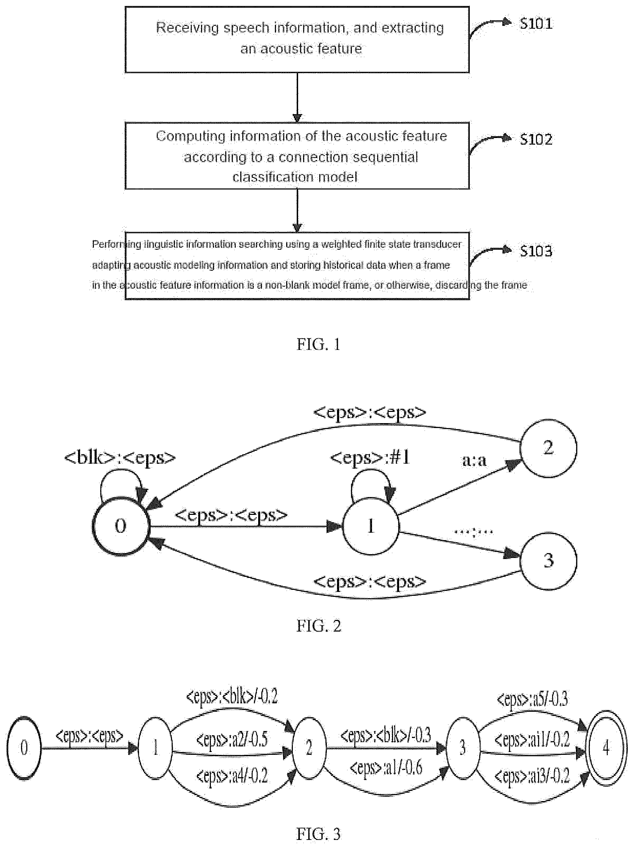

FIG. 1 illustrates a flowchart of a method for speech recognition and decoding according to a first embodiment of the present disclosure, specifically including following steps:
S101: receiving speech information, and extracting an acoustic feature;
   in extracting feature, acoustic information of an acoustic wave is extracted using traditional signal processing technologies, frame by frame, to form a vector used as an input feature for back-end modeling and decoding.
S102: computing information of the acoustic feature according to a connection sequential classification model;
   wherein the information of the acoustic feature substantially includes a vector extracted frame by frame from acoustic information of an acoustic wave.

A storage structure of the acoustic information is a word graph of the connection sequential classification model, an information storage structure of the acoustic feature is represented based on the weighted finite state transducer, and all candidate acoustic output models between two different model output moments are connected one to another.

Modeling is performed on phoneme information of an audio based on a sequential classification model. A specific method is as below: collected training data with labeled audio contents that is subjected to pre-processing and feature extraction are used as model input and output for model training of the sequential classification model. Under the training of mass data, the resulting connection sequential classification model is used for model searching. After inputting each frame of acoustic feature, the trained model may provide an occurrence probability of all modeling units being phonemes.

Specifically, after inputting each frame of the acoustic feature, the connection sequential classification model may obtain, frame by frame, an occurrence probability of individual phonemes.

S103: performing linguistic information searching using a weighted finite state transducer adapting acoustic modeling information and storing historical data when a frame in the acoustic feature information is a non-blank model frame, or otherwise, discarding the frame.

The weighted finite state transducer is a structure representing a speech recognition search network. A corresponding weighted finite state transducer adapting acoustic modeling information is designed for a speech recognition system using the connection sequential classification model. This model emphasizes high efficiency, memory and computing resources saving. The structure of the model is shown in Fig. 2, wherein "<blk>" represents a blank model in the connection sequential classification model, "<eps>" represents a blank identifier, "#1" is used for adapting to a polysyllabic word in "the weighted finite state transducer representing a word pronunciation sequence", "a" represents an exemplary model in the connection sequential classification model, and "..." represents other models in the connection sequential classification model. Compared to other existing similar structures, this structure can reduce about 50% of algorithmic computing and memory resource consumption, and linguistic information is completely equivalent.

Specifically, the method further includes: outputting a speech recognition result by synchronization decoding of phoneme.

This embodiment provides a word graph of the connection sequential classification model, which is a high-efficiency acoustic information storage structure and serves as a carrier for synchronization decoding of phoneme as mentioned above.

This acoustic information structure is represented based on the weighted finite state transducer, and specifically all candidate acoustic output models between two different model output moments are connected one to another. FIG. 3 illustrates a construction example of this structure, and exemplary acoustic information corresponding to this structure is seen in Table 1 as below:

**Table 1. Exemplary acoustic information of the acoustic information structure**

| Time | Phone: score |
|---|---|
| 0.4s | <blk>:0.2 a2:0.5 a4:0.2 |
| 0.9s | <blk>:0.3 a1:0.6 |
| 1.5s | a5:0.3 ail:0.2 ai3:0.2 |

By establishing the connection sequence classification model in the embodiments of the present disclosure, the acoustic modeling is more accurate. By using the improved weighted finite state transducer, model representation is more efficient, and nearly 50% of computation and memory resource consumption is reduced. By using a phoneme synchronization method during decoding, amount and times of computations are effectively reduced for model searching.

The probability output distribution of the connection sequential classification model has a characteristics of unimodal protrusion. One sentence corresponds to a group of probability output in individual frames. Generally, an ordinate axis represents a probability value and an abscissa axis is a time axis. Peak values of different colors represent outputs of different models.

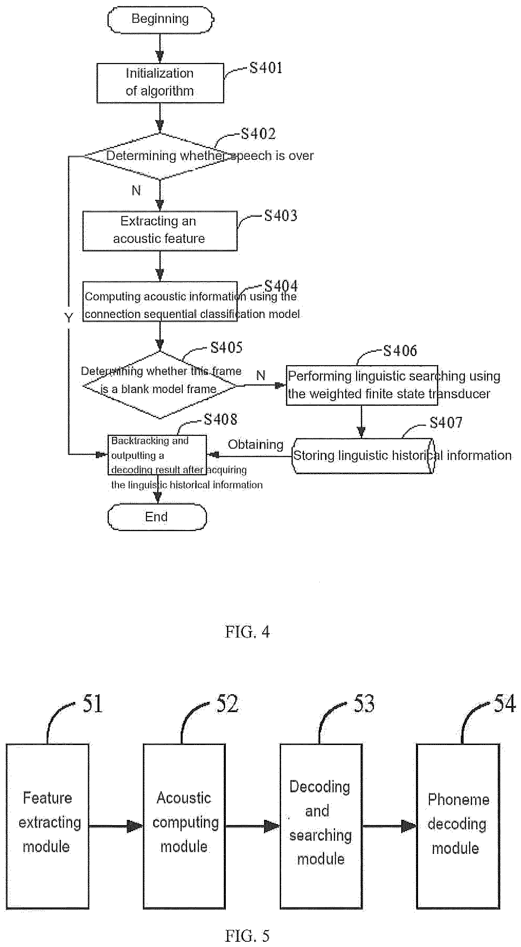

Based on this phenomenon, this embodiment provides a novel method for synchronization decoding of phoneme instead of the traditional frame-by-frame synchronization decoding. The method for synchronization decoding of phoneme is used for linguistic network search only in the event of non-blank model output. Otherwise, the acoustic information of the current frame is directly discarded and a next frame is skipped to. An algorithm process is shown in FIG. 4.

FIG. 4 illustrates a flowchart of a method for synchronization decoding of phoneme according to a second embodiment of the present disclosure, which is described in detail as below:
S401: initialization of algorithm;
S402: determining whether speech is over, and backtracking and outputting a decoding result if yes, or otherwise going to Step S403;
S403: extracting an acoustic feature;
S404: computing acoustic information using the connection sequential classification model;
S405: determining whether each frame in the acoustic information is a blank model frame, and directly discarding the frame if yes, or otherwise going to Step S406:
S406: performing linguistic searching using the weighted finite state transducer;
S407: storing linguistic historical information; and
S408: backtracking and outputting a decoding result after acquiring the linguistic historical information.

This method discards linguistic network searching relative to a large number of redundant blank models, without any loss of search space.

By establishing the connection sequential classification model in the embodiments of the present disclosure, the acoustic modeling is more accurate. By using the improved weighted finite state transducer, model representation is more efficient, and nearly 50% of computation and memory resource consumption is reduced. By using a phoneme synchronization method during decoding, amount and times of computations are effectively reduced for model searching.

FIG. 5 illustrates a structural schematic diagram of a device for speech recognition and decoding according to an embodiment of the present disclosure, which is described in detail as below:
a feature extracting module 51 configured to receive speech information and extract an acoustic feature; and
an acoustic computing module 52 configured to compute information of the acoustic feature according to a connection sequential classification model;
the information of the acoustic feature substantially includes a vector extracted frame by frame from acoustic information of an acoustic wave.

A storage structure of the acoustic information is a word graph of the connection sequential classification model, an information storage structure of the acoustic feature is represented based on the weighted finite state transducer, and all candidate acoustic output models between two different model output moments are connected one to another.

Specifically, after inputting each frame of the acoustic feature, the connection sequential classification model may obtain, frame by frame, an occurrence probability of individual phonemes.

The device further includes a decoding and searching module 53 configured to perform linguistic information searching using a weighted finite state transducer adapting acoustic modeling information and to store historical data when a frame in the acoustic feature information is a non-blank model frame, or otherwise to discard the frame.

The device further includes a phoneme decoding module 54s configured to output a speech recognition result by synchronization decoding of phoneme.

By establishing the connection sequential classification model, the acoustic modeling is more accurate. By using the improved weighted finite state transducer, model representation is more efficient, and nearly 50% of computation and memory resource consumption is reduced. By using a phoneme synchronization method during decoding, amoun and times of computations are effectively reduced for model searching.

It should be understood for those skilled in the art that a part of or all of steps in the embodiments may be implemented by hardware, or by programs instructing the related hardware. The programs may be stored in a computer readable storage medium. The storage medium described as above may be a read-only memory, a magnetic disc, an optical disc or the like.

The above descriptions are merely preferred embodiments of the present disclosure, which are not used to limit the present disclosure. Various variations, equivalent substitutions and modifications made within the spirit and principles of the present disclosure shall be involved in the scope of the present disclosure.

## Claims

1. A method for speech recognition and decoding, comprising:
receiving speech information, and extracting an acoustic feature;
computing information of the acoustic feature according to a connection sequential classification model; and
performing linguistic information searching using a weighted finite state transducer adapting acoustic modeling information and storing historical data when a frame in the acoustic feature information is a non-blank model frame, or otherwise, discarding the frame.

2. The method according to claim 1, further comprising: outputting a speech recognition result by synchronization decoding of phoneme.

3. The method according to claim 1, **characterised in that** the acoustic feature information substantially comprises a vector extracted frame by frame from acoustic information of an acoustic wave.

4. The method according to claim 1, **characterised in that** after inputting each frame of the acoustic feature, the connection sequential classification model obtains, frame by frame, an occurrence probability of individual phonemes.

5. The method according to claim 1, **characterised in that** a storage structure of the acoustic information is a word graph of the connection sequential classification model, an information storage structure of the acoustic feature is represented based on the weighted finite state transducer, and all candidate acoustic output models between two different model output moments are connected one to another.

6. A device for speech recognition and decoding, comprising:
a feature extracting module configured to receive speech information and extract an acoustic feature;
an acoustic calculating module configured to compute information of the acoustic feature according to a connection sequential classification model; and
a decoding and searching module configured to perform linguistic information searching using a weighted finite state transducer adapting acoustic modeling information and to store historical data when a frame in the acoustic feature information is a non-blank model frame, or otherwise to discard the frame.

7. The device according to claim 6, further comprising:
a phoneme decoding module configured to output a speech recognition result by synchronization decoding of phoneme.

8. The device according to claim 6, **characterised in that** the acoustic feature information substantially comprises a vector extracted frame by frame from acoustic information of an acoustic wave.

9. The device according to claim 6, **characterised in that** after inputting each frame of the acoustic feature, the connection sequential classification model obtains, frame by frame, an occurrence probability of individual phonemes.

10. The device according to claim 6, **characterised in that** a storage structure of the acoustic information is a word graph of the connection sequential classification model, an information storage structure of the acoustic feature is represented based on the weighted finite state transducer, and all candidate acoustic output models between two different model output moments are connected one to another.
